# EUROPEAN PATENT SPECIFICATION

(11) **EP 1 549 010 B1**
(45) Date of publication and mention of the grant of the patent: **13.08.2008**
(21) Application number: 03293294.9
(22) Date of filing: 23.12.2003
(51) Int. Cl.: H04L 29/06

(54) **Rekeying in secure mobile multicast communications**
Schlüsselaktualisierung in sicherer Multicastkommunikation
Mise à jour de clé dans la communication multicast mobile

(43) Date of publication of application: 29.06.2005
(73) Proprietor: MOTOROLA INC., Schaumburg, IL 60196 (US)
(72) Inventor: Kellil, Mounir, 94550 Chevilly Larue (FR); Janneteau, Christophe, 78390 Bois d'Arcy (FR); Olivereau, Alexis, 91120 Palaiseau (FR)
(74) Representative: Cross, Rupert Edward Blount

(56) References cited:
- US-A- 5 381 479
- DATABASE INSPEC [Online] THE INSTITUTION OF ELECTRICAL ENGINEERS, STEVENAGE, GB; 23 September 2002 (2002-09-23), CHUN ZHANG ET AL: "Comparison of inter-area rekeying algorithms for secure wireless group communications" XP002288877 Database accession no. 7475268 -& 22ND IFIP WORKING GROUP 7.3 INTERNATIONAL SYMPOSIUM ON COMPUTER PERFORMANCE MODELING, MEASUREMENT AND EVALUATION. PERFORMANCE 2002, ROME, ITALY, 23-27 SEPT. 2002, [Online] vol. 49, no. 1-4, 23 September 2002 (2002-09-23), pages 1-20, XP002289413 Perform. Eval. (Netherlands), Performance Evaluation, Sept. 2002, Elsevier, Netherlands ISSN: 0166-5316 Retrieved from the Internet: URL:ftp://gaia.cs.umass.edu/pub/Zhang02_Cm pAreaRekey.pdf> [retrieved on 2004-07-19]

## Description

### Field of the invention

This invention relates to rekeying in secure mobile multicast communications and, more specifically to inter-area rekeying of encryption keys.

### Background of the invention

The emergence of new Internet applications such as video-conferencing, e-learning and many other applications which are based on group communications experience new challenges such as support of user mobility. A new type of Internet solution is being specified to allow users to communicate with multiple remote hosts while moving in the Internet. In the perspective of deploying multiparty-based applications, the Internet Engineering Task Force (IETF) has defined the IP multicast model [S. Deering, "Host Extension for IP Multicasting", Internet RFC 1112, August 1989]. This model allows any user to send Data Traffic in a single copy of its message to a group of hosts knowing only their group address, or more exactly their multicast address: members join the group by subscription without the sender needing (nor being able) to use the individual group members' unicast addresses. The sender's message is then optimally duplicated by multicast routers on the path towards the receivers.

Unfortunately, the IP Multicast model was originally specified without security support. This issue remains an obstacle for a broader deployment of IP multicast, especially for security-sensitive applications such as Pay-Per-View, private conferences and military communications, for example, where data confidentiality in a dynamic membership context is necessary. Furthermore, the mobility of users complicates the IP multicast security problem.

While general aspects of the multicast security issues [for example T. Hordjono and B. Weis, " The Multicast security (MSEC) Architecture", Internet draft, draft-ietf-msec-arch-04.txt, November 2003] and group encryption key management issues [for example Mark Baugher and al., "The Group Domain of Interpretation", Internet RFC 3574, July 2003] have been broadly addressed through multiple works and studies, the impact of member's mobility has not been widely considered. The expression 'intra-group mobility' is used herein to refer to movement of member between administrative areas ('inter-autonomous-system mobility'), without leaving or joining a group. The group is normally defined by the multicast address to which the member has subscribed. However, in some circumstances, it would be desirable for a mobile member to remain part of a group defined by the Traffic Encryption Key while changing multicast address.

Such mobility complicates the IP multicast security problem. In fact, inter-autonomous-systemmobility confuses the group membership dynamism since mobile members not only wish to join or leave the multicast group, but may also wish to move within the group between networks or areas while remaining (from a group membership viewpoint) in the secure session. However, member's movement between networks or areas may compromise data secrecy. This would normally require expensive rekeying (the generation of new keying materials) for the existing members in order to ensure data secrecy (Forward and Backward Secrecies). Such a constraint is due to the fact that the underlying group key management service was only designed for stationary members [M. Baugher, R. Canetti, L. Doneti, and F. Lindholm, "Group Key Management Architecture", Internet draft, draft-ietf-msec-gkmarch-06.txt, September 2003].

The Multicast Security (msec) Working Group of the Internet Engineering Task Force (IETF) specifies a common architecture for secure multicast communications [T. Hordjono and B. Weis, "The Multicast security (MSEC) Architecture", Internet draft, draft-ietf-msec-arch-04.txt, November 2003]. This architecture defines a security entity used for delivery and management of cryptographic keys in secure groups. Such an entity is called the Group Controller Key Server (GCKS). The algorithms that manage the distribution, rekeying ('updating'), and revocation of the group keys are known as group key management protocols. The challenge of any key management protocol is to generate and distribute new keys such that the data remains secure while the overall impact on system performance is minimized. There are two basic designs of group key management model: a centralized design and a distributed design.

In the centralized design, there is a single GCKS that manages the keying material for all the group members.

In a distributed architecture the GCKS entity interacts securely with other GCKS entities to provide more scalable group management services, and hence to avoid signaling overhead and system bottleneck in the case of a large number of group members, which are more likely in the case of a centralized architecture. The manager of the entire group - the domain - is called the Domain GCKS. The domain is divided into administrative regions called areas. The area may be constructed on either a physical or a logical basis. For example, an area may represent a Corporate Network, or may contain a set of users that belong to a common logical group or coalition, independently of their physical location. Each area is managed by an area GCKS, a 'local GCKS'. The present invention relates to the distributed architecture.

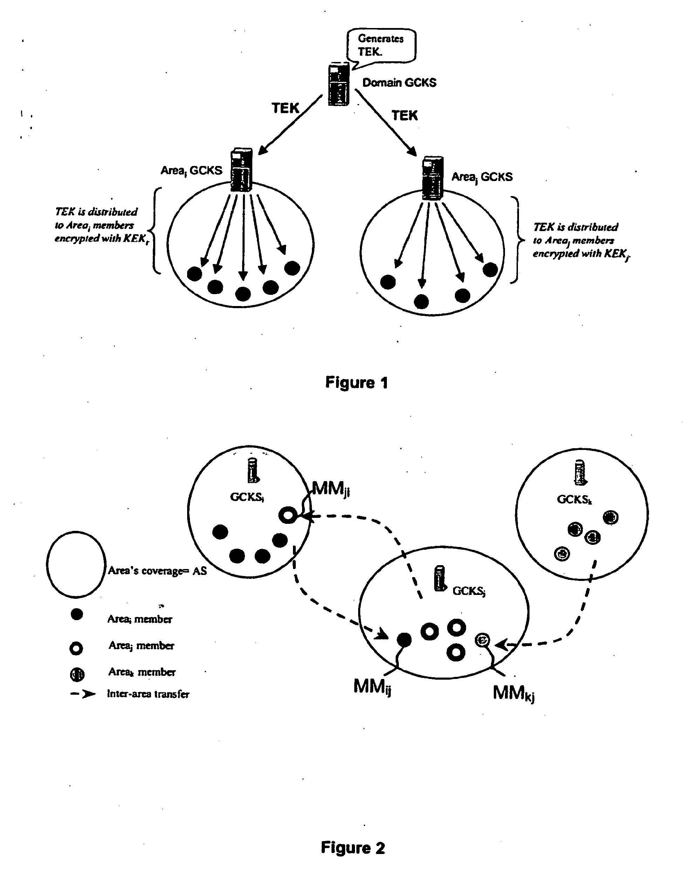

In order to ensure the confidentiality of multicast application data, the Domain GCKS generates and distributes to all group members a common key called a Traffic Encryption Key (TEK). This key is used by the multicast source to encrypt data traffic, and by receivers to decrypt source's data. In a distributed scheme, when the Domain GCKS generates the data key (TEK), it multicasts it securely to each area's local Group Controller Key Server (GCKS). The local GCKS is responsible for distributing the TEK to members within its area in a secure fashion using a specific key called: Key Encryption Key (KEK). These keys are used by the local GCKS to encrypt the TEK and subsequent KEK versions (local rekeying). The means by which the local GCKS distributes keys in a secure fashion may include a unicast or multicast secure channel, a logical hierarchy of keys or an extension of the server hierarchy. This framework is depicted in Figure 1 of the accompanying drawings.

The group is dynamic, so that when a new member joins the group, the TEK must be changed to ensure that the newly joining member cannot decrypt previous communications; this requirement is called Backward Secrecy. In the same way, whenever a member leaves the group session, the TEK must be changed - rekeyed - to ensure that the leaving member cannot decrypt further communications using the TEK it held before leaving the session; such a requirement is called Forward Secrecy. In addition, during a secure multicast session, keys will have a predetermined lifetime and will be periodically refreshed according to particular intervals. This ensures that no keying material remains valid for more than a fixed period of time.

In more detail, when a new member joins the group through a given area it sends the local GCKS a signalling message to request the Group Traffic Encryption Key (TEK) as well as the local KEK. The local GCKS then creates and multicasts a new KEK to all the existing members of its area encrypted with the previous KEK. The new KEK is also unicast to the new member using a secure channel established using suitable mechanisms such as those based on a shared key or member's public key. Once the new KEK is distributed in the relevant area, the Domain GCKS multicasts the new TEK to all local GCKSs and then each local GCKS (GCKSᵢ, GCKSⱼ and so on) forwards the new TEK to group members in their respective areas in one multicast distribution using the respective KEKs (KEKᵢ, KEKⱼ and so on). The process of updating the keying material when a new member joins the group ensures backward secrecy. As a result, the new member cannot have access to an unchanged KEK to decrypt the previous TEK that was encrypted with an unchanged KEK, and thus cannot obtain data transmitted prior to its arrival.

When a member leaves the multicast group, all the valid keys it held just before leaving the session must be changed by notifying its local GCKS. In this case, the member's local GCKS will create and distribute a new KEK to the remaining area members. The proposed solutions for inter-area rekeying we will review here suggest using a unicast secure channel to distribute the new KEK to each remaining member, instead of multicasting, since for both scalability and performance reasons, the GCKS does not have an encryption key shared only with all the remaining members (that is to say all except the leaving member), and hence the GCKS could not use multicast to send the new KEK only to the remaining members. Once the new KEK is distributed, the Domain GCKS generates and distributes a new TEK to all the local GCKSs. Each local GCKS then forwards securely the new TEK to all its area members using the KEK. This method ensures forward secrecy. That is, a leaving member cannot decrypt future group communications in any area because it does not have the required keying materials (i.e. the new TEK and the new KEK).

In summary, the group key management service is required to ensure the following features in respect of all group members, even for group members that move intra-group between different areas in the domain - inter-area mobility :
- Confidentiality: Only group members can read the multicast traffic.
- Backward secrecy: Every time a new member joins the group, the Traffic Encryption Key (TEK) must be changed for all group members to ensure that the new member cannot decrypt previously transmitted data traffic.
- Forward secrecy: When any group member leaves the multicast group, the TEK must be changed for the remaining group members to ensure that the leaving member cannot decrypt subsequent data traffic.

The situation for intra-group inter-area mobility is illustrated in Figure 2, in which a current group member MMᵢⱼ initially in the area managed by GCKSᵢ moves intra-group to the area managed by GCKSⱼ, a current group member MMⱼᵢ initially in the area managed by GCKSⱼ moves intra-group to the area managed by GCKSᵢ, and a current group member MMₖⱼ initially in the area managed by GCKSₖ moves intra-group to the area managed by GCKSⱼ.

It will be appreciated that each area may contain one or more Autonomous Systems (ASs) such as Corporate Networks that may represent a distinct organization with its own physical network. The ASs may also be limited by geographical constraints. Problems have arisen with proposed mechanisms for rekeying, due to security policies, key latency and risks of traffic interruptions and over-frequent inter-area signalling.

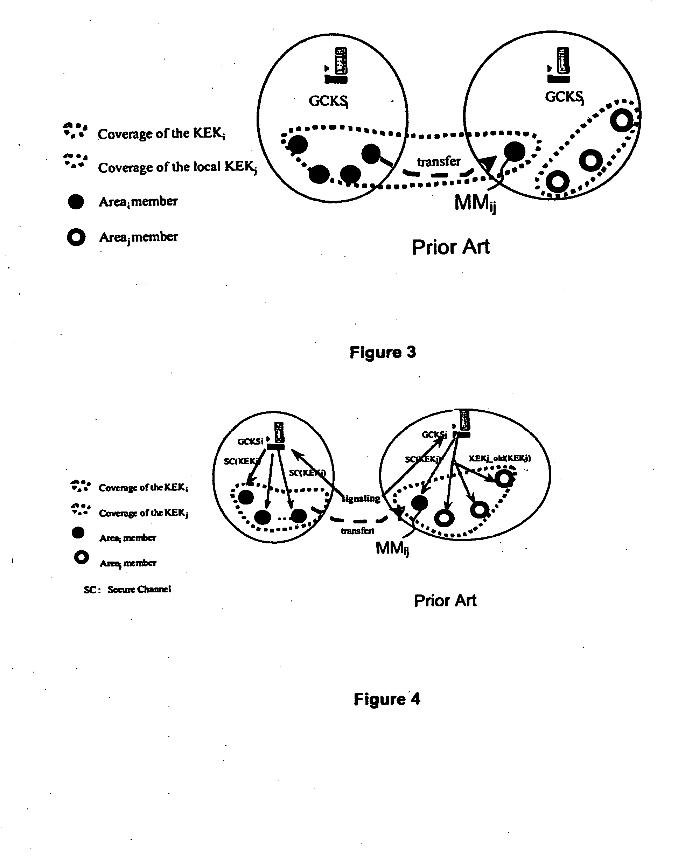

One known proposal, referred to as a Static Rekey (SR) approach is illustrated in Figure 3 [C. Zhang and al., "Comparison of Inter-Area Rekeying Algorithms for Secure Wireless Group Communications", IFIP WG 7.3 International Symposium on Computer Performance Modeling, Measurement and Evaluation, September 2002]. In this proposal, the local GCKSᵢ maintains the KEKᵢ unchanged when a mobile member MMᵢⱼ moves intra-group to a new area. That is, the mobile member MMᵢⱼ will continue receiving the KEKᵢ originating from its GCKSᵢ. To achieve this, the GCKSᵢ may use inter-area multicast to distribute updates of KEKᵢ for members out of the area. Otherwise, it may use a forwarding node, such as the Home Agent in the case of Mobile IP.

This approach is straightforward and does not require the mobile member MMᵢⱼ to register with the new local GCKSⱼ whenever it moves to a new areaⱼ. In addition, movement of the member MMᵢⱼ between the two areas affects neither the members of the previous area nor those of the new one. However, the Static Rekey approach may not work in case where the mobile member moves to a network that belongs to a new administrative area where the security policy restricts the traffic and the interactions with foreign areas. This may be the case when the entire network consists of a coalition composed of loosely connected ASs (e.g., in cooperative military), for example, or when the keys are multicast to the members. Moreover, with the Static Rekey Approach the distribution of keying material to members MMᵢⱼ out of their areas may suffer latencies or may even fail. Such problems are especially constraining in applications that depend on a rapid dissemination of secure information such as military operations, for example.

In order to reduce both these latencies and inter-AS Signaling, new approaches have been defined proposing mapping the logical area structure directly onto the physical topology of the network. In addition, these approaches propose moving the key changes as close as possible to the members, shifting existing trust relationships to the current location of the mobile member to support future key exchange and eliminating the member's dependence on a distant security server.

If the inter-area movement of the mobile member MMᵢⱼ were simply considered as a leave from the old area GCKSᵢ followed by a join to the new area GCKSⱼ, this case would be assimilated to that of a member joining and/or leaving the group altogether. This would introduce an interruption of data transmission as well as additional computations whenever the mobile member transfers between areas. In addition, new TEKs may be generated twice due to the movement of the member MMᵢⱼ if the Domain GCKS considers that the entering member is both a member leaving and a member joining the group.

Another known proposal, referred to as an Immediate Rekey (IR) approach is illustrated in Figure 4 [B. DeCleene, L.Dondeti, S. Griffin, T. Hardjono, D. Kiwior, J. Kurose, D. Towsley, S. Vasudevan, and C. Zhang, "Secure Group Communications for Wireless Networks", Proceedings of Military Communications Conference, IEEE MILCOM, Communications for Network-Centric Operations: Creating the Information Force. Vienna, October 2001, pp. 113-117]. The Immediate Rekey algorithm defines new semantics that address member's mobility. In fact, when a group member MMᵢⱼ moves to a new area, it sends a signaling message to the previous GCKSᵢ as well as the visited GCKSⱼ. The areas GCKSᵢ and GCKSⱼ then update their local KEKs. No TEK rekey is required since the member MMᵢⱼ proves its group membership to the new local GCKSⱼ using specific information called credentials, for example in the manner described in S. Griffin, B. DeCleene, L. Dondeti, R. Flynn, D. Kiwior, and A. Olbert," Hierarchical Key Management for Mobile Multicast Members. Accordingly, the data transmission continues uninterrupted.

This approach is simple from a key management point of view. In addition, it separates the case of intra-group mobile members from that of members entering or leaving the group by maintaining the TEK unchanged when a current group member moves between areas. However, it implies systematic rekeying of the local KEKs KEKᵢ and KEKⱼ for all group members within the areas affected by the handover of the mobile member MMᵢⱼ. Thus, the efficiency of this approach is seriously affected in the case of group members with a high inter-area mobility.

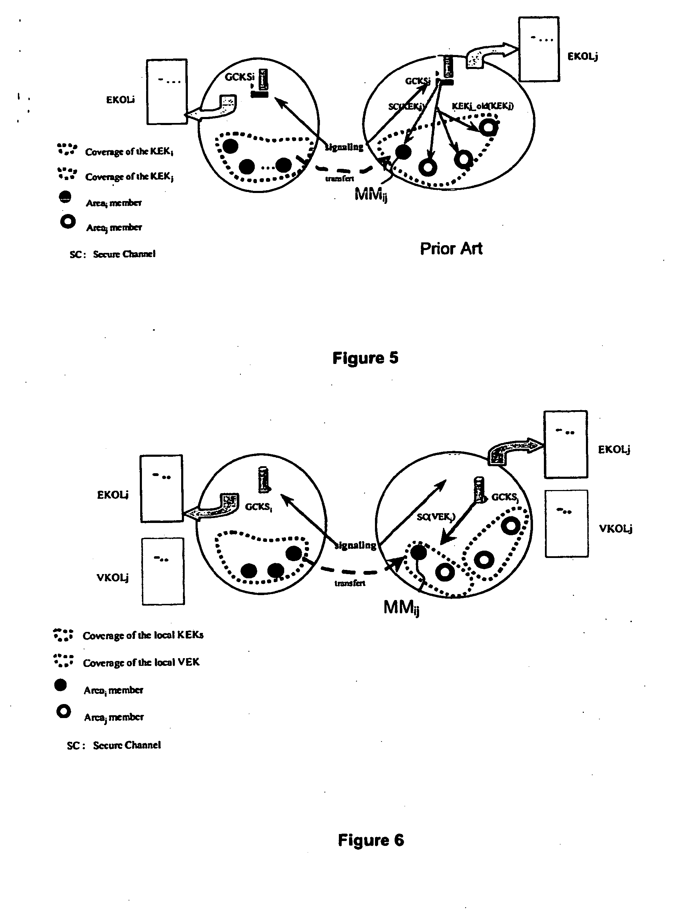

Yet another known proposal, referred to as a First Entry Delayed Rekey+ Periodic (FEDRP) approach is illustrated in Figure 5 [C. Zhang and al., "Comparison of Inter-Area Rekeying Algorithms for Secure Wireless Group Communications", IFIP WG 7.3 International Symposium on Computer Performance Modeling, Measurement and Evaluation, September 2000]. The FEDRP approach is like the IR approach in the use of semantics of transfer between areas. It enhances this approach, however, since no local rekeying occurs in the previous area. That is, when the member MMᵢⱼ moves intra-group from areaᵢ to areaⱼ, it sends one signalling message to GCKSᵢ and one signalling message to GCKSⱼ. GCKSᵢ then adds the member MMᵢⱼ to a list of members that have left the area by intra-group mobility without leaving the group and still hold a valid area key KEKᵢ for a limited period of time. This list is called an Extra Key Owner List (EKOL). It is reset when and if a member holding a valid area key KEK_{i,} in areaᵢ or visiting another area, leaves the group and when the timer of the validity period expires. In some cases, the mobile member MMᵢⱼ may accumulate multiple KEKs that correspond to different areas it has been in. If the mobile member MMᵢⱼ returns to an area it has previously visited, the local GCKS checks if this member is on the local EKOL list. If this is the case, it will be removed from the list and no rekeying will be needed. In this case, the mobile member MMᵢⱼ receives (optionally) the current KEKᵢ using a secure channel. However, if the member MMᵢⱼ is not present in the list, a new KEKᵢ is generated and sent in one multicast distribution to current area members using the previous KEK_{i,} and in a unicast transmission using a secure channel to the mobile member MMᵢⱼ.

In order to ensure forward secrecy, when a mobile member MMᵢⱼ visiting another area leaves the group session, all the KEKs it holds must be changed for all the group members holding those KEKs within the affected areas and, in addition, all the EKOL lists holding those KEKs are reset. The KEKᵢ that the member holds out of areaᵢ may also be changed under specific conditions related to EKOLᵢ (especially expiration of the key validity period).

The FEDRP approach improves significantly the inter-area rekeying by keeping the KEKᵢ of the previous area GCKSᵢ unchanged. However, the FEDRP approach suffers from systematic rekeying when the mobile member enters a new area GCKSⱼ for the first time. That is, when the member MMᵢⱼ moves to the new area GCKS_{j,} its mobility is supported in the previous area GCKS_{i,} but not in the visited area GCKSⱼ. In addition, during the session duration, it is more probable that a member enters a given area for the first time than for more than one time. As a result, when a member moves between areas, it is highly probable that a local rekeying occurs in the visited area.

It is desirable to provide a lightweight mechanism that optimizes the computation for mobile members while reducing the impact of their movement on group rekeying

### Summary of the invention

The present invention provides a method of and apparatus for inter-area rekeying of encryption keys in secure mobile multicast communications as described in the accompanying claims.

### Brief description of the drawings

Figure 1 is a schematic diagram of the architecture of a distributed group key management system, showing Traffic Encryption Key distribution
Figure 2 is a schematic diagram of the group key management system of Figure 1, showing inter-area movement of group members,
Figure 3 is a schematic diagram of the group key management system of Figure 1, showing a known rekeying method for inter-area movement of group members,
Figure 4 is a schematic diagram of the group key management system of Figure 1, showing another known rekeying method for inter-area movement of group members,
Figure 5 is a schematic diagram of the group key management system of Figure 1, showing yet another known rekeying method for inter-area movement of group members,
Figure 6 is a schematic diagram of a group key management system of the kind shown Figure 1 and Figure 2 for inter-area movement of group members in accordance with one embodiment of the present invention, given by way of example,
Figure 7 is a flow chart of an example of a rekeying process when a member joins an area in the system of Figure 6,
Figure 8 is a flow chart of an example of a rekeying process when a member leaves an area in the system of Figure 6,
Figure 9 is a flow chart of an example of a traffic key forwarding process in the system of Figure 6, and
Figure 10 is a flow chart of an example of a traffic key reception process in the system of Figure 6.

### Detailed description of the preferred embodiments

Embodiments of the present invention shown in the drawings enable a reduction in the computational capabilities needed for both the key server and area members to support encryption/decryption operations due to membership dynamism (group join/leave) and member's frequent mobility, by separating member's mobility treatment from group membership dynamism, and by amortizing the movement impact over the TEK validity period. In addition embodiments of the present invention provide the following features.
- Reduced impact of member's mobility on group rekeying: the key management system, by separating member's mobility treatment from group membership dynamism (group join/leave), facilitates movement of mobile members between administrative areas while remaining (from a group membership viewpoint) in the group. In addition, when the mobile member leaves the group, the rekeying process reacts with a limited additional impact on the remaining group members. This residual impact is typically due to the accumulated information that the leaving mobile member got from the different areas it visited.
- Reduced computational requirements for mobile members: mobile members have generally very limited resources (e.g. memory space, and computational power). Hence, it is useful to minimize for mobile members both the memory space requirements (e.g. number and size of stored keys) and computations (those involving cryptographic algorithms in particular).
- Trust in Mobile members: the group key management system foresees a level of trust to attribute to mobile members because they may move across different managed areas, and accumulate information about local security services of the different areas they visit. In particular, for some applications, such as military communications, the mobile member must be prevented from continuing to hold valid keying material that it got from a specific security server when the mobile member is out of the management area of that server for more than a given period.

More particularly, embodiments of the present invention provide the following enhancements:
- avoiding rekeying the members of the visited area each time a mobile member enters it;
- amortizing the impact of member's movement over the TEK lifetime;
- providing a conditional self-generation of local keys for mobile members to reduce signalling between the local GCKS and its members;
- saving resource consumption using derived key-based rekeying for mobile group members.

This mechanism enables the impact of member's movement on area member rekeying and that of the visited area in particular to be reduced significantly. It separates the rekeying of mobile members from membership dynamism (group join/leave) without affecting the KEK rekeying process. This is achieved by introducing a specific key called Visitor Encryption Key (VEK), which is provided to mobile members when they move to a new area.

In more detail, as shown in Figure 6, when the mobile member MMᵢⱼ moves form areaᵢ to areaⱼ, it sends a signalling message to GCKSᵢ of the area it is leaving as well as a signalling message to GCKSⱼ of the area in which it is arriving to notify them about its mobility. The signalling messages may be implemented as in FEDRP and IR, using credentials, for example as described in S. Griffin, B. DeCleene, L. Dondeti, R. Flynn, D. Kiwior, and A. Olbert," Hierarchical Key Management for Mobile Multicast Members". Once MMᵢⱼ is in the new areaⱼ, the GCKSⱼ sends the Visitor Encryption Key VEKⱼ rather than the KEKⱼ to the mobile member using a secure channel. This key VEKⱼ acts similarly to a KEK within this areaⱼ but is not used by members MMⱼ already in the areaⱼ and possessing the current KEKⱼ.

There are two types of owner lists for the GCKSs: EKOL (for example similar to that described in B. DeCleene, L.Dondeti, S. Griffin, T. Hardjono, D. Kiwior, J. Kurose, D. Towsley, S. Vasudevan, and C. Zhang, "Secure Group Communications for Wireless Networks", Proceeding of Military Communications Conference, IEEE MILCOM, Communications for Network-Centric Operations: Creating the Information Force. Vienna, October 2001, pp. 113-117) and in addition a Visitor-Key Owner List 'VKOL' that distinguishes between group members MMᵢ situated in the respective group key management areaᵢ and group members MMᵢⱼ that were situated in the respective group key management areaᵢ area; but are visiting another area areaⱼ. In this embodiment of the present invention, Visitor-Key Owner Lists (such as VKOLᵢ) contain the list of members still holding a valid VEK (such as VEKᵢ) but which have subsequently left the key area (areaᵢ) in which they obtained the VEK. It is within the scope of the present invention, however, to modify the system to function in other ways, for example so that the Visitor-Key Owner Lists (such as VKOLᵢ) contain the list of members still holding a valid VEK (such as VEKᵢ) and which are still in the key area (areaᵢ) in which they obtained the VEK. This may assume that GCKSᵢ can distinguish between members holding VEKᵢ and are out of area; from those that are in. For example, when the VKOLᵢ is reset (as described below) only members with VEKᵢ and that are out of areaᵢ will be removed.

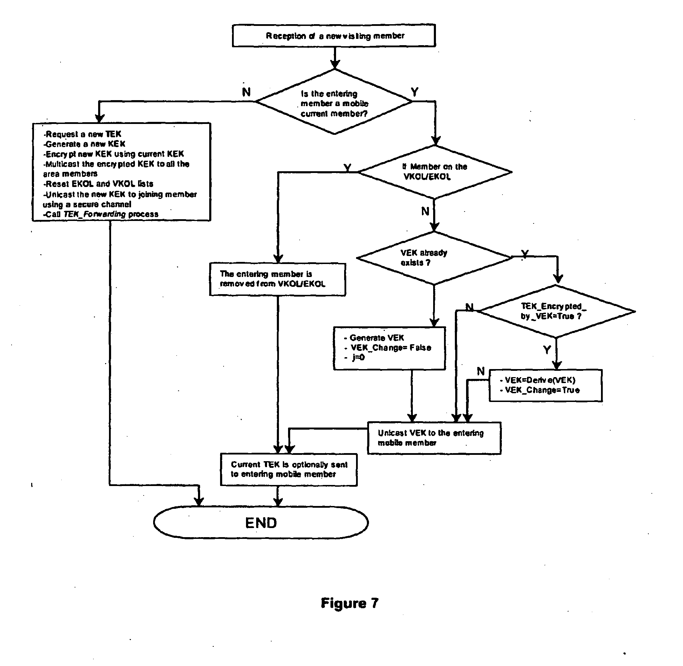

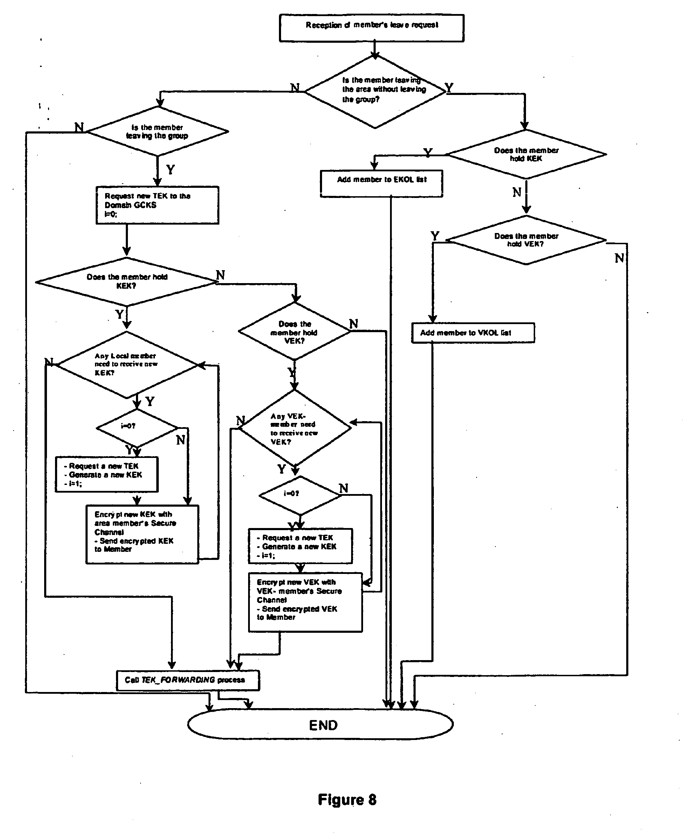

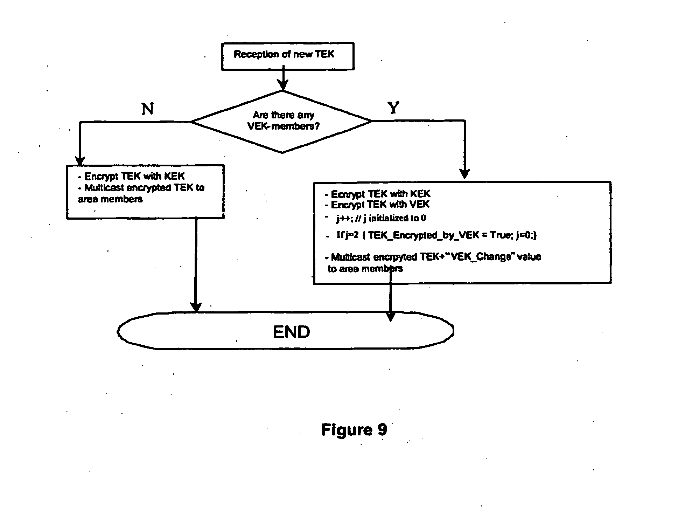

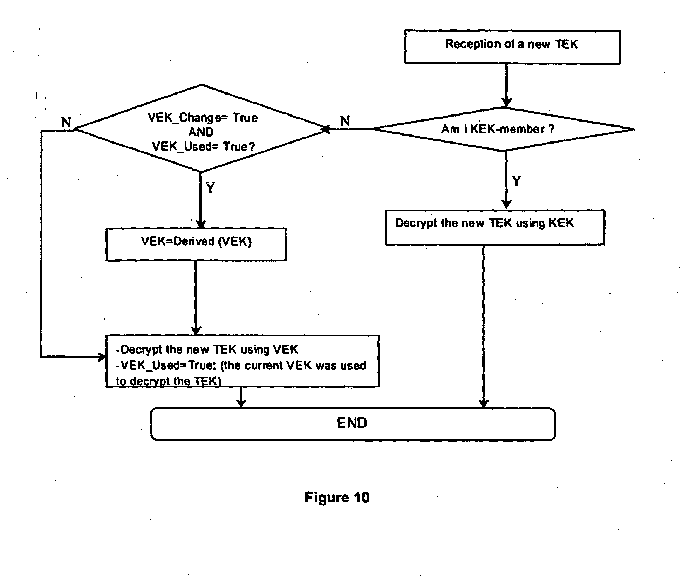

The flow charts shown in Figures 7 to 10 show in more detail examples of the processes that the local GCKS performs in the embodiment of Figure 6 when a new member enters or leaves the area. The processes shown include Group join and leave, as well as movement of a current group member between two areas.

In the embodiment of the invention shown in Figure 6, when a mobile member MMᵢⱼ moves intra-group from areaᵢ to areaⱼ, the following processes will be triggered.:
- if this mobile member MMᵢⱼ holds a VEKᵢ, the GCKSᵢ places the member in the VKOLᵢ list.
- if the mobile member MMᵢⱼ holds a KEKᵢ, the GCKSᵢ places that member in the EKOLᵢ list.

In both cases, the GCKSᵢ triggers a validity period (as in FEDRP) for the local key VEKᵢ or KEKᵢ that the mobile member MMᵢⱼ holds. Subsequently, if the mobile member returns to areaᵢ during the validity period, the GCKSᵢ removes this member from the list and no local rekeying occurs (optionally, GCKSᵢ provides the entering member with the current TEK). Accordingly, it is unnecessary to rekey area members when a mobile member returns to a previously visited area. However, if the mobile member remains out of the areaᵢ and the period expires, the local GCKSᵢ resets the owner list EKOLᵢ or VKOLᵢ and distributes a new local key (KEKᵢ or VEKᵢ) to each concerned local member using a secure channel.

Once the mobile member MMᵢⱼ enters the areaⱼ, we may distinguish two cases:
- If there are no VEKⱼ-members, the GCKSⱼ generates a VEKⱼ key (rather than a new KEKⱼ) and sends it (optionally, along with the current TEK) to the visiting member MMᵢⱼ in a secure channel, and the KEKⱼ remains unchanged.
- If VEKⱼ-members exist, the GCKSⱼ checks first whether the current VEKⱼ was used to encrypt the previous TEK. If it is not the case, the GCKSⱼ will provide the entering mobile member MMᵢⱼ the current VEKⱼ. Otherwise, the GCKSⱼ will provide the entering mobile member MMᵢⱼ a new VEKⱼ derived from the current value of VEKⱼ (preferably using a one-way hash function, for instance: VEK_{New}=Hash(VEK_{Current})). During the validity period of the current TEK, the local GCKSⱼ may not derive more than once a new VEKⱼ value whatever the number of new mobile members that enter GCKSⱼ's areaⱼ during the TEK validity period, since the visited GCKSⱼ is unaware when the visiting mobile member MMᵢⱼ joined the group in a different area.

Note that in all cases, no local rekeying (KEKⱼ or VEKⱼ) is triggered whenever a mobile current group member MMᵢⱼ moves between two areas. Besides, both Backward and Forward secrecies are ensured. Hence, this embodiment of the present invention separates fully member's intra-group mobility from group membership dynamism (group join/ leave).

When a new member (as opposed to a current group member entering the area by intra-group mobility) joins the group via a given areaᵢ where there are VEK-members, the local GCKSᵢ will distribute a new KEKᵢ to all the area members encrypted separately with the current KEKᵢ and the current VEKᵢ. As a result, all the current area members will then hold the new KEKᵢ. The KEKᵢ is distributed by unicast to the new member as well using a secure channel. Next, the Domain GCKS multicasts securely the new TEK to all the area GCKSs. Each area GCKS then multicasts the new TEK to all the group members using the local area keys (local KEKs, and local VEKs when and where there are VEK-members).

When any group member leaves the multicast group (as opposed to a current area member leaving the area by intra-group mobility), all the area keys it holds are changed within the affected areas. In this way, for a given areaᵢ, the GCKSᵢ sends either a new KEKᵢ or a new VEKᵢ (depending on which local key the leaving member holds) to the concerned members of the areaᵢ using a secure channel with each member, which may be any secure channel except that based on current VEK/KEK, for example a unicast channel. Next, the Domain GCKS multicasts securely the new TEK to all the area GCKSs. Each area GCKS then multicasts the new TEK to all the group members using the local area keys (local KEKs, and local VEKs when and where there are VEK-members) In circumstances where it is desired for a mobile member to be able to change multicast address while keeping the same Traffic Encryption Key TEK, it is unnecessary to send the mobile member a new TEK or to rekey the TEK.

If the rekey is a KEKᵢ rekey, all the local members will be sent the new KEKᵢ and the local VKOL list is reset (previous members who visited the areaᵢ are absent will no longer hold a valid VEKᵢ); in this case, any group members still in the areaᵢ that hold a VEKᵢ will switch to the new KEKᵢ. Once in place, the local GCKSᵢ distributes the new TEK in one multicast transmission using the local keys.

However there is no need to change the KEKᵢs of the areaᵢ if the leaving member held only the VEKᵢ. Hence, we save resource consumption since the local KEKᵢ remains unchanged. In fact, in prior art approaches, when a member leaves the group session, a new local KEK is distributed individually for each remaining area member before a new TEK is multicast to these members. For some applications, the multicast traffic is interrupted until the new TEK will be distributed. This may increase session interruption latency particularly when the number of remaining area members is important. With this embodiment of the present invention, when the member leaving areaᵢ holds a VEKᵢ and not a KEKᵢ, the session interruption latency is significantly reduced whether or not the number of KEKᵢ-members in the affected areaᵢ is significant. Such a gain of processing time is particularly valuable in real-time applications.

For both group join and leave cases, the EKOLᵢ as well as the VKOLᵢ lists on which the leaving member is listed are reset when the new local key is distributed to areaᵢ members.

In summary, in this embodiment of the present invention, the VEKᵢ can be considered as a temporary key, since the members holding such a key in a given area will switch to the new KEKᵢ when a KEKᵢ rekeying occurs (after a group join or periodic rekeying). Any additional processing that management of the VEKᵢ may introduce in the GCKSᵢ is negligible.

It is within the scope of the present invention, however, to modify the system to function in other ways with respect to VEK management, for example, so that a new member receives an updated VEK rather than an updated KEK. Another modification would suggest that when a member holding a VEKᵢ leaves the group, the GCKSᵢ may distribute a new KEKᵢ (rather than updating VEKᵢ as described in our basic mechanism) for all the remaining areaᵢ members using a secure channel with each of those members.

Each time the local GCKSᵢ needs to forward a new TEK (TEK rekey) within its areaᵢ that includes VEKᵢ-members, it multicasts the new TEK separately encrypted with KEKᵢ and VEKᵢ. To achieve this, the local GCKSᵢ checks first if it has obtained the current VEKᵢ by derivation from the previous one since the previous TEK forwarding.

If so, the local GCKSᵢ notifies the VEKᵢ-members (within the TEK distribution message) that the new TEK they are receiving is encrypted with a new VEKᵢ (derived from the previous one see above). The VEKᵢ-members then decrypt this new TEK using the derived VEKᵢ (the members obtain the new VEKᵢ by applying the same function to the previous VEKᵢ as the one that was applied by the GCKSᵢ server).

If no derived VEKᵢ value has been generated since the previous TEK forwarding, it means that the VEKᵢ has not been changed since then. Thus, the GCKSᵢ encrypts the TEKᵢ with the current value of the VEKᵢ and multicast it to VEKᵢ-members, notifying them not to obtain a derived VEKᵢ.

## Claims

1. A method of inter-area rekeying of encryption keys in secure mobile multicast communications, in which a Domain Group Controller Key Server (Domain GCKS) distributes Traffic Encryption Keys (TEK) to a plurality of local Group Controller Key Servers (local GCKS) serving respective group key management areas, and said local Group Controller Key Servers forward said Traffic Encryption Keys, encrypted using Key Encryption Keys (KEKᵢ, KEKⱼ) that are specific to the respective local Group Controller Key Server (local GCKSᵢ, GCKSⱼ), to group members situated in the respective group key management areas, said local Group Controller Key Servers (GCKSᵢ, GCKSⱼ) constituting Extra Key Owner Lists (EKOLᵢ, EKOLⱼ) for said group key management areas (areaᵢ, areaⱼ) that distinguish group members (MMᵢ, MMⱼ) possessing Key Encryption Keys (KEKᵢ, KEKⱼ) and situated in the corresponding group key management area (areaᵢ, areaⱼ) from group members (MMᵢⱼ) possessing Key Encryption Keys (KEKᵢ) that were situated in the corresponding group key management area (areaᵢ,) but are visiting another area (areaⱼ), **characterized in that** each local GCKS (GCKSj) forwards said Traffic Encryption Keys to members visiting from another area, (area i) encrypted using a visitor Encryption Key (VEK) that is specific to the GCKS of the area it is visiting (GCKSj) and is different from the Key Encryption Key of said area (KEKj)'.

2. A method as claimed in claim 1, and comprising rekeying said Traffic Encryption Keys (TEK) after rekeying said Key Encryption Key (KEKᵢ, KEKⱼ).

3. A method as claimed in claim 1 or 2, wherein said local Group Controller Key Servers (GCKSᵢ, GCKSⱼ) rekey a Key Encryption Key (KEKᵢ, KEKⱼ) by a process including sending a new Key Encryption Key (KEKᵢ, KEKⱼ) to current group members encrypted using the current Key Encryption Key (KEKᵢ, KEKⱼ) and to visiting group members using the Visitor Encryption Key (VEKᵢ, VEKⱼ).

4. A method as claimed in claim 1 or 2, wherein said local Group Controller Key Server GCKSᵢ sends the Visitor Encryption Key (VEKⱼ) rather than the Key Encryption Key (KEKᵢ) to new members joining the group via areaᵢ.

5. A method as claimed in claim 3, wherein said local Group Controller Key Servers (GCKSᵢ, GCKSⱼ) rekey a Key Encryption Key (KEKᵢ, KEKⱼ) by a process including sending said new Key Encryption Key (KEKᵢ, KEKⱼ) selectively to existing group members situated in the corresponding group key management area (areaᵢ, areaⱼ).

6. A method as claimed in claim 3 or 5, wherein said local Group Controller Key Servers (GCKSᵢ, GCKSⱼ) rekey a Key Encryption Key (KEKᵢ, KEKⱼ) by a process including sending a new Key Encryption Key (KEKᵢ, KEKⱼ) to existing group members using multicast messages and to visiting group members over a different secure channel.

7. A method as claimed in claim 6, wherein said Key Encryption Key (KEKᵢ, KEKⱼ) is sent to visiting group members over said different secure channel using a unicast message.

8. A method as claimed in any of claims 3 to 7, wherein rekeying a Key Encryption Key (KEKᵢ, KEKⱼ) comprises said local Group Controller Key Servers (GCKSᵢ, GCKSⱼ) sending a new Key Encryption Key (KEKᵢ, KEKⱼ) selectively to current group members currently situated in the corresponding group key management areas (areaᵢ, areaⱼ).

9. A method as claimed in any preceding claim, wherein said local Group Controller Key Servers (GCKSᵢ, GCKSⱼ) rekey said Visitor Encryption Keys (VEKᵢ, VEKⱼ) by a process including sending a new Key Encryption Key (KEKᵢ, KEKⱼ) to said visiting group members using the Visitor Encryption Key (VEKᵢ, VENⱼ).

10. A method as claimed in any preceding claim and including said local Group Controller Key Servers (GCKSᵢ, GCKSⱼ) constituting Visitor Key Owner Lists (VKOLᵢ, VKOLⱼ) for said group key management areas (areaᵢ, areaⱼ) that distinguish group members (MMᵢ, MMⱼ) possessing Visitor Encryption Keys (VEKᵢ, VEKⱼ) and situated in the corresponding group key management area (areaᵢ, areaⱼ) from group members (MMᵢⱼ) possessing Visitor Encryption Keys (VEKᵢ) that were situated in the corresponding group key management area (areaᵢ) but are visiting another area (areaⱼ).

11. A method as claimed in claim 10 wherein said Extra Key Owner Lists (EKOLᵢ, EKOLⱼ) and said Visitor Key Owner Lists (VKOLᵢ, VKOLⱼ) comprise lists of the group members (MMᵢⱼ) possessing Key Encryption Keys (KEKᵢ), respectively Visitor Encryption Keys (VEKᵢ, VEKⱼ), that were situated in the corresponding group key management area (areaᵢ) but are visiting another area (areaⱼ).

12. A method as claimed in any preceding claim, wherein a group member (MMᵢⱼ) that was visiting another group key management area (areaⱼ) returns to an area (areaᵢ) for which it possesses a corresponding Key Encryption Key (KEKᵢ) or Visitor Encryption Key (VEKᵢ) before expiry of a validity period set by the corresponding Group Controller Key Server (GCKSᵢ) without said corresponding Group Controller Key Server (GCKSᵢ) rekeying said Key Encryption Key (KEKᵢ).

13. A method as claimed in any preceding claim, and including said local Group Controller Key Server (GCKSᵢ) sending a new Visitor Encryption Key (VEKⱼ) to a visiting group member (MMᵢⱼ) arriving in the corresponding group key management area (areaⱼ) if there is no other visiting group member (MMᵢⱼ) situated in the corresponding group key management area (areaⱼ), and if a current Visitor Encryption Key (VEKⱼ) exists that has already been used to encrypt a previous Traffic Encryption Key (TEK).

14. A method as claimed in claim 13, wherein sending a new Visitor Encryption Key (VEKⱼ) to a visiting group member (MMᵢⱼ) arriving in the corresponding group key management area (areaⱼ) comprises deriving the new Visitor Encryption Key (VEKⱼ) from the current Visitor Encryption Key (VEKⱼ) using a secure function known to current visiting group members (MMᵢⱼ), and forwarding said Traffic Encryption Keys (TEK) subsequently to group members (MMᵢⱼ) visiting the respective group key management areas (areaⱼ) includes indicating whether said Traffic Encryption Keys (TEK) is encrypted using such a derived Visitor Encryption Key (VEKⱼ).

15. A method as claimed in claim 13, wherein said secure function for deriving the new Visitor Encryption Key (VEKⱼ) comprises a one-way hash function.

16. A method as claimed in any preceding claim, wherein said local Group Controller Key Servers (GCKSᵢ, GCKSⱼ) selectively rekey said Key Encryption Key (KEKᵢ, KEKⱼ) and said Visitor Encryption Keys (VEKᵢ, VEKⱼ) when a current group member (MMᵢ, MMⱼ, MMᵢⱼ) leaves the group in areas for which the leaving group member holds a current Key Encryption Key (KEKᵢ, KEKⱼ), respectively Visitor Encryption Keys (VEKᵢ, VEKⱼ).

## Patentansprüche

1. Verfahren zur Schlüsselaktualisierung bzw. Neuverschlüsselung von Verschlüsselungsschlüsseln zwischen Bereichen in sicheren mobilen Multicast-Kommunikationen, in welchem ein Domain Group Controller Key Server (Domain GCKS) Verkehrs-Verschlüsselungsschlüssel bzw. Traffic Encryption Keys (TEK) an eine Vielzahl lokaler Group Controller Key Server (lokale GCKS) verteilt, welche jeweilige Gruppenschlüssel-Verwaltungsbereiche bedienen, und diese lokalen Group Controller Key Server senden die Traffic Encryption Keys, welche unter Verwendung von Schlüssel-Verschlüsselungsschlüsseln bzw. Key Encryption Keys (KEKᵢ, KEKⱼ), welche dem jeweiligen lokalen Group Controller Key Server (lokaler GCKSᵢ, GCKSⱼ) spezifisch sind, an Gruppenmitglieder, welche in den jeweiligen Gruppenschlüssel-Verwaltungsbereichen angeordnet sind, wobei die lokalen Group Controller Key Server (GCKSᵢ, GCKSⱼ) Extra Key Owner Lists (EKOLᵢ, EKOLⱼ) bzw. Eigenschlüssel-Besitzerlisten) für diese Gruppenschlüssel-Verwaltungsbereiche (Bereichᵢ, Bereichⱼ) bilden, welche Gruppenmitglieder (MMᵢ,MMⱼ), welche Key Encryption Keys (KEKᵢ, KEKⱼ) besitzen und in dem entsprechenden Gruppenschlüssel-Verwaltungsbereich (Bereichᵢ, Bereichⱼ) angeordnet sind, von Gruppenmitgliedern (MMᵢⱼ) unterscheiden, welche Key Encryption Keys (KEK*ᵢ*) besitzen, welche in dem entsprechenden Gruppenschlüssel-Verwaltungsbereich (Bereichᵢ) angeordnet waren, welche jedoch einen anderen Bereich (Bereichⱼ) besuchen, **dadurch gekennzeichnet, dass** jeder lokale GCKS (GCKSᵢ) die Traffic Encryption Keys an Mitglieder seiner Gruppe sendet, welche einen anderen Bereich (Bereicⱼ) besuchen, wobei die Mitglieder unter Verwendung eines Besucher- oder Visitor Encryption Key (VEKⱼ) verschlüsselt sind und dieser VEKⱼ dem GCKS (GCKSⱼ) des besuchten Bereichs spezifisch ist und sich von dem Key Encryption Key (KEKⱼ) dieses Bereichs unterscheidet.

2. Verfahren nach Anspruch 1, welches des Weiteren den Schritt der Schlüsselaktualisierung bzw. Neuverschlüsselung der Traffic Encryption Keys (TEK) nach der Schlüsselaktualisierung bzw. Neuverschlüsselung des Key Encryption Key (KEKᵢ, KEKⱼ) aufweist.

3. Verfahren nach Anspruch 1 oder 2, **dadurch gekennzeichnet, dass** die lokalen Group Controller Key Server (GCKSᵢ, GCKSⱼ) einen Key Encryption Key (KEKᵢ, KEKⱼ) mit Hilfe eines Prozesses schlüsselaktualisieren bzw. neu verschlüsseln, wobei der Prozess die Übertragung eines neuen Key Encryption Key (KEKᵢ, KEKⱼ) an augenblickliche Gruppenmitglieder, welche unter Verwendung des augenblicklichen Key Encryption Key (KEKᵢ, KEKⱼ) verschlüsselt sind, und an Besucher-Gruppenmitglieder einschließt, welche den Visitor Encryption Key (VEKᵢ, VEKⱼ) verwenden.

4. Verfahren nach Anspruch 1 oder 2, **dadurch gekennzeichnet, dass** der lokale Group Controller Key Server GCKSᵢ eher den Visitor Encryption Key (VEKᵢ) als den Key Encryption Key (KEKᵢ) an neue Mitglieder, welche sich der Gruppe über Antennen anschließen, sendet.

5. Verfahren nach Anspruch 3, **dadurch gekennzeichnet, dass** lokale Group Controller Key Server (GCKSᵢ, GCKSⱼ) einen Key Encryption Key (KEKᵢ, KEKⱼ) mit Hilfe eines Prozesses schlüsselaktualisieren bzw. neu verschlüsseln, welcher die selektive Übertragung des neuen Key Encryption Key (KEKᵢ, KEKⱼ) an in dem entspechenden Gruppenschlüssel-Verwaltungsbereich (Bereichᵢ, Bereichⱼ) angeordnete bestehende Gruppenmitglieder einschließt.

6. Verfahren nach Anspruch 3 oder 5, **dadurch gekennzeichnet, dass** die lokalen Group Controller Key Server (GCKSᵢ, GCKSⱼ) einen Key Encryption Key (KEKᵢ, KEKⱼ) mit Hilfe eines Prozesses schlüsselaktualisieren bzw. neu verschlüsseln, welcher die Übertragung eines neues Key Encryption Key (KEKᵢ, KEKⱼ) an bestehende Gruppenmitglieder unter Verwendung von Multicast-Nachrichten und an Besucher-Gruppenmitglieder über einen unterschiedlichen sicheren Kanal einschließt.

7. Verfahren nach Anspruch 6, **dadurch gekennzeichnet, dass** der Key Encryption Key (KEKᵢ, KEKⱼ) an Besucher-Gruppenmitglieder über diesen unterschiedlichen sicher Kanal unter Verwendung einer Unicast-Nachricht gesendet wird.

8. Verfahren nach einem der Ansprüche 3 bis 7, **dadurch gekennzeichnet, dass** eine Schlüsselaktualisierung bzw. Neuverschlüsselung eines Key Encryption Key (KEKᵢ, KEKⱼ) einschließt, dass die lokalen Group Controller Key Server (GCKSᵢ, GCKSⱼ) einen neuen Key Encryption Key (KEKᵢ, KEKⱼ) selektiv an augenblickliche Gruppenmitglieder, welche sich gegenwärtig in den entsprechenden Gruppenschlüssel-Verwaltungsbereichen (Bereichᵢ, Bereichⱼ) befinden, senden.

9. Verfahren nach einem der vorhergehenden Ansprüche, **dadurch gekennzeichnet, dass** die lokalen Group Controller Key Server (GCKSᵢ, GCKSⱼ) die Visitor Encryption Keys (VEKᵢ, VEKⱼ) mit Hilfe eines Prozesses schlüsselaktualisieren bzw. neu verschlüsseln, welcher die Übertragung eines neuen Key Encryption Key (KEKᵢ, KEKⱼ) an die Besucher-Gruppenmitglieder unter Verwendung des Visitor Encryption Key (VEKᵢ, VEKⱼ) einschließt.

10. Verfahren nach einem der vorhergehenden Ansprüche, welches des Weiteren einschließt, dass die lokalen Group Controller Key Server (GCKSᵢ, GCKSⱼ) Besucherschlüssel-Besitzerlisten oder Visitor Key Owner Lists (VKOLᵢ, VKOLⱼ) für die Gruppenschlüssel-Verwaltungsbereiche (Bereichᵢ, Bereichⱼ) bilden, welche Gruppenmitglieder (MMᵢ, MMⱼ), die Visitor Encryption Keys (VEKᵢ, VEKⱼ) besitzen und in dem entsprechenden Gruppenschlüssel-Verwaltungsbereich (Bereichᵢ, Bereichⱼ) angeordnet sind, von Gruppenmitgliedern (MMᵢⱼ) unterscheiden, welche Visitor Encryption Keys (VEKᵢ) besitzen, die in dem entsprechenden Gruppenschlüssel-Verwaltungsbereich (Bereichᵢ) angeordnet waren, jedoch einen anderen Bereich (Bereichⱼ) besuchen.

11. Verfahren nach Anspruch 10, **dadurch gekennzeichnet, dass** die Eigenschlüssel-Besitzerlisten oder Extra Key Owner Lists (EKOLᵢ, EKOLⱼ) sowie die Besucherschlüssel-Besitzerlisten oder Visitor Key Owner Lists (VKOLᵢ, VKOLⱼ) Listen der Gruppenmitglieder (MMᵢⱼ) aufweisen, welche Key Encryption Keys (KEKᵢ) bzw. Visitor Encryption Keys (VEKᵢ, VEKⱼ) besitzen, welche in dem entsprechenden Gruppenschlüssel-Verwaltungsbereich (Bereichᵢ) angeordnet waren, jedoch einen anderen Bereich (Bereichⱼ) besuchen.

12. Verfahren nach einem der vorhergehenden Ansprüche, **dadurch gekennzeichnet, dass** ein Gruppenmitglied (MMᵢⱼ), welches einen anderen Gruppenschlüssel-Verwaltungsbereich (Bereichⱼ) besucht hat, zu einem Bereich (Bereichᵢ) zurückkehrt, für welchen es einen entsprechenden Key Encryption Key (KEKᵢ) oder Visitor Encryption Key (VEKᵢ) besitzt, bevor eine von dem jeweiligen Group Controller Key Server (GCKSᵢ) festgelegte Gültigkeitszeitdauer abläuft, ohne dass der entsprechende Group Controller Key Server (GCKSᵢ) den Key Encryption Key (KEKᵢ) neu verschlüsselt.

13. Verfahren nach einem der vorhergehenden Ansprüche, welches des Weiteren den Schritt einschließt, dass der lokale Group Controller Key Server (GCKSᵢ) einen neuen Visitor Encryption Key (VEKⱼ) an ein Besucher-Gruppenmitglied (MMᵢⱼ) sendet, welches in dem entsprechenden Gruppenschlüssel-Verwaltungsbereich (Bereichⱼ) eintrifft, falls es kein anderes Besucher-Gruppenmitglied (MMᵢⱼ) gibt, welches in dem entsprechenden Gruppenschlüssel-Verwaltungsbereich (Bereichⱼ) angeordnet ist, und falls es einen augenblicklichen Visitor Encryption Key (VEKⱼ) gibt, welcher bereits zur Verschlüsselung eines früheren Traffic Encryption Key (TEK) verwendet worden ist.

14. Verfahren nach Anspruch 13, **dadurch gekennzeichnet, dass** der Schritt der Übertragung eines neuen Visitor Encryption Key (VEKⱼ) an ein in dem entsprechenden Gruppenschlüssel-Verwaltungsbereich (Bereichⱼ) eintreffendes Besucher-Gruppenmitglied (MMᵢⱼ) die Ableitung des neuen Visitor Encryption Key (VEKⱼ) aus dem augenblicklichen Visitor Encryption Key (VEKⱼ) unter Verwendung einer den augenblicklichen Besucher-Gruppenmitgliedern (MMᵢⱼ) bekannten sicheren Funktion einschließt, und dass der Schritt der Weiterleitung des Traffic Encryption Key (TEK) im Anschluss daran an Gruppenmitglieder (MMᵢⱼ), welche den jeweiligen Gruppenschlüssel-Verwaltungsbereich (Bereichⱼ) besuchen, die Angabe einschließt, ob der Traffic Encryption Key (TEK) unter Verwendung eines auf diese Weise abgeleiteten Visitor Encryption Key (VEKⱼ) verschlüsselt ist.

15. Verfahren nach Anspruch 13, **dadurch gekennzeichnet, dass** die sichere Funktion zur Ableitung des neuen Visitor Encryption Key (VEKⱼ) eine Einweg-Hash-Funktion aufweist.

16. Verfahren nach einem der vorherigen Ansprüche, **dadurch gekennzeichnet, dass** die lokalen Group Controller Key Server (GCKSᵢ, GCKSⱼ) selektiv den Key Encryption Key (KEKᵢ, KEKⱼ) und die Visitor Encryption Keys (VEKᵢ, VEKⱼ) neu verschlüsseln, wenn ein augenblickliches Gruppenmitglied (MMᵢ, MMⱼ, MMᵢⱼ) die Gruppe in Bereichen verlässt, für welche das verlassende Gruppenmitglied einen augenblicklichen Key Encryption Key (KEKᵢ, KEKⱼ) bzw. Visitor Encryption Keys (VEKᵢ, VEKⱼ) besitzt.

## Revendications

1. Procédé pour une mise à jour de clés interzones de clés de chiffrement dans des communications mobiles sécurisées à diffusion multiple, dans lequel un serveur de clés de contrôleur de groupe de domaine (GCKS de domaine) distribue des clés de chiffrement du trafic (TEK) à une pluralité de serveurs de clés de contrôleur de groupe locaux (GCKS locaux) desservant des zones de gestion de clé de groupe respectives, et lesdits serveurs de clés de contrôleur de groupe locaux transmettent lesdites clés de chiffrement du trafic, chiffrées à l'aide de clés de chiffrement de clés (KEKᵢ, KEKⱼ) qui sont spécifiques à chaque serveur de clés de contrôleur de groupe local respectif (GCKSᵢ, GCKSⱼ local), à des éléments de groupe situés dans les zones de gestion de clé de groupe respectives, lesdits serveurs de clés de contrôleur de groupe locaux (GCKSᵢ, GCKSⱼ) constituant des listes de propriétaires de clés supplémentaires (EKOLᵢ EKOLⱼ) pour lesdites zones de gestion de clés de groupe (zoneᵢ, zoneⱼ) qui distinguent des éléments de groupe (MMᵢ, MMⱼ) possédant des clés de chiffrement de clés (KEKᵢ, KEKⱼ) et situés dans la zone de gestion de clés de groupe correspondante (zoneᵢ, zoneᵢ) d'éléments de groupe (MMᵢᵢ) possédant des clés de chiffrement de clés (KEKᵢ) qui étaient situés dans la zone de gestion de clés de groupe (zoneᵢ) mais qui visitent une autre zone (zoneⱼ),
**caractérisé en ce que** chaque GCKS local (GCKSᵢ) achemine lesdites clés de chiffrement du trafic à des éléments de son groupe visitant une autre zone (zoneᵢ) chiffrés au moyen d'une clé de chiffrement de visiteur (VEKⱼ) qui est spécifique au GCKS de la zone visitée (GCKSⱼ) et est différente de la clé de chiffrement de clés de ladite zone (KEKⱼ).

2. Procédé selon la revendication 1, et comprenant une mise à jour de clé desdites clés de chiffrement du trafic (TEK) après une mise à jour de clé de ladite clé de chiffrement de clés (KEKᵢ, KEKⱼ).

3. Procédé selon la revendication 1 ou 2, dans lequel lesdits serveurs de clés de contrôleur de groupe locaux (GCKSᵢ, GCKSⱼ) mettent à jour une clé de chiffrement de clés (KEKᵢ, KEKⱼ) par un processus comportant l'envoi d'une nouvelle clé de chiffrement de clés (KEKᵢ, KEKⱼ) à des éléments de groupe chiffrés à l'aide de la clé de chiffrement de clés (KEKᵢ, KEKⱼ) et à des éléments de groupe visiteurs en utilisant la clé de chiffrement de visiteur (VEKᵢ, VEKⱼ).

4. Procédé selon la revendication 1 ou 2, dans lequel ledit serveur de clés de contrôleur de groupe local GCKSᵢ transmet la clé de chiffrement de visiteur (VEKᵢ) plutôt que la clé de chiffrement de clés (KEKᵢ) à des nouveaux membres rejoignant le groupe via la zoneᵢ.

5. Procédé selon la revendication 3, dans lequel lesdits serveurs de clés de contrôleur de groupe locaux (GCKSᵢ, GCKSⱼ) mettent à jour une clé de chiffrement de clés (KEKᵢ, KEKⱼ) par un processus comportant l'envoi de ladite nouvelle clé de chiffrement de clés (KEKᵢ, KEKⱼ) sélectivement à des éléments de groupe existants situés dans la zone de gestion de clés de groupe correspondante (zoneᵢ, zoneⱼ).

6. Procédé selon la revendication 3 ou 5, dans lequel lesdits serveurs de clés de contrôleur de groupe locaux (GCKSᵢ, GCKSⱼ) mettent à jour une clé de chiffrement de clés (KEKᵢ, KEKⱼ) par un processus comportant l'envoi d'une nouvelle clé de chiffrement de clés (KEKⱼ, KEKⱼ) à des éléments de groupe existant, au moyen de messages de multidiffusion, et à des éléments de groupe visiteurs sur un canal sécurisé différent.

7. Procédé selon la revendication 6, dans lequel ladite clé de chiffrement de clés (KEKᵢ, KEKⱼ) est transmise à des éléments de groupe visiteurs sur ledit canal sécurisé différent en utilisant un message d'envoi individuel.

8. Procédé selon l'une quelconque des revendications 3 à 7, dans lequel une mise à jour d'une clé de chiffrement de clés (KEKᵢ, KEKⱼ) comporte l'étape dans laquelle lesdits serveurs de clés de contrôleur de groupe locaux (GCKSᵢ, GCKSⱼ) transmettent une nouvelle clé de chiffrement de clés (KEKᵢ, KEKⱼ) sélectivement à des éléments de groupe en cours situés à ce moment dans les zones de gestion de clés de groupe correspondantes (zoneᵢ, zoneⱼ).

9. Procédé selon l'une quelconque des revendications précédentes, dans lequel lesdits serveurs de clés de contrôleur de groupe locaux (GCKSᵢ, GCKSⱼ) mettent à jour lesdites clés de chiffrement de visiteur (VEKᵢ, VEKⱼ) par un processus comportant l'envoi d'une nouvelle clé de chiffrement de clés (KEKⱼ, KEKⱼ) audits éléments de groupe visiteurs en utilisant la clé de chiffrement de visiteur (VEKᵢ, VEKⱼ).

10. Procédé selon l'une quelconque des revendications précédentes et comportant l'étape dans laquelle lesdits serveurs de clés de contrôleur de groupe locaux (GCKSᵢ, GCKSⱼ) constituent des listes de propriétaires de clés de visiteur (VKOLᵢ, VKOLⱼ) pour lesdites zones de gestion de clés de groupe (zoneᵢ, zoneⱼ) qui distinguent des éléments de groupe (MMᵢ, MMⱼ) possédant des clés de chiffrement de visiteur (VEKᵢ, VEKⱼ) et situés dans la zone de gestion de clés de groupe correspondantes (zoneᵢ, zoneⱼ) d'éléments de groupe (MMᵢⱼ) possédant des clés de chiffrement de visiteur (VEKᵢ) qui étaient situés dans la zone de gestion de clés de groupe correspondante (zoneᵢ), mais qui visitent une autre zone (zoneᵢ).

11. Procédé selon la revendication 10, dans lequel lesdites listes de propriétaires de clés supplémentaires (EKOLᵢ, EKOLⱼ) et lesdites listes de propriétaires de clés de visiteur (VKOLᵢ, VKOLⱼ) comprennent des listes des éléments de groupe (MMᵢⱼ) possédant des clés de chiffrement de clés (KEKᵢ), respectivement des clés de chiffrement de visiteur (VEKᵢ, VEKⱼ), qui étaient situés dans la zone de gestion de clés de groupe (zoneᵢ), mais qui visitent une autre zone (zoneⱼ).

12. Procédé selon l'une quelconque des revendications précédentes, dans lequel un élément de groupe (MMᵢⱼ) qui visitait une autre zone de gestion de clés de groupe (zoneⱼ) revient vers une zone (zoneᵢ) pour laquelle il possède une clé de chiffrement de clés correspondante (KEKᵢ) ou une clé de chiffrement de visiteur (VEKᵢ) avant l'expiration d'une période de validité établie par le serveur de clés de contrôleur de groupe correspondant (GCKSᵢ) sans que ledit serveur de clés de contrôleur de groupe correspondant (GCKSᵢ) ne mette à jour ladite clé de chiffrement de clés (KEKᵢ).

13. Procédé selon l'une quelconque des revendications précédentes, et comportant l'étape dans laquelle ledit serveur de clés de contrôleur de groupe local (GCKSᵢ) transmet une nouvelle clé de chiffrement de visiteur (VEKⱼ) à un élément de groupe visiteur (MMᵢⱼ) arrivant dans la zone de gestion de clés de groupe correspondante (zoneⱼ) s'il n'y a pas d'autre élément de groupe visiteur (MMᵢⱼ) situé dans la zone de gestion de clés de groupe correspondante (zoneⱼ), et si une clé de chiffrement de visiteur en cours (VEKⱼ) existe laquelle a déjà été utilisée pour chiffrer une clé de chiffrement du trafic précédente (TEK).

14. Procédé selon la revendication 13, dans lequel l'envoi d'une nouvelle clé de chiffrement de visiteur (VEKⱼ) à un élément de groupe visiteur (MMᵢⱼ) arrivant dans la zone de gestion de clés de groupe correspondante (zoneⱼ) comporte l'étape consistant à dériver la nouvelle clé de chiffrement de visiteur (VEKⱼ) à partir de la clé de chiffrement de visiteur en cours (VEKⱼ) à l'aide d'une fonction sécurisée connue des éléments de groupe visiteurs en cours (MMᵢⱼ), et l'acheminement desdites clés de chiffrement du trafic (TEK), subséquemment, à des éléments de groupe (MMᵢⱼ) visitant les zones de gestion de clé de groupe respectives (zoneⱼ) comprend l'étape consistant à indiquer si lesdites clés de chiffrement du trafic (TEK) sont chiffrées au moyen d'une telle clé de chiffrement de visiteur dérivée (VEKⱼ).

15. Procédé selon la revendication 13, dans lequel ladite fonction sécurisée pour dériver la nouvelle clé de chiffrement de visiteur (VEKⱼ) comporte une fonction de hachage unidirectionnelle.

16. Procédé selon l'une quelconque des revendications précédentes, dans lequel lesdits serveurs de clés de contrôleur de groupe locaux (GCKSᵢ, GCKSⱼ) mettent à jour de façon sélective ladite clé de chiffrement de clés (KEKᵢ, KEKⱼ) et lesdites clés de chiffrement de visiteur (VEKᵢ, VEKⱼ) lorsqu'un élément de groupe (MMᵢ, MMⱼ, MMᵢⱼ) quitte le groupe dans des zones pour lesquelles l'élément de groupe partant détient une clé de chiffrement de clés en cours (KEKᵢ, KEKⱼ), respectivement, des clés de chiffrement de visiteur (VEKᵢ, VEKⱼ).
